# EUROPEAN PATENT SPECIFICATION

(11) **EP 2 275 328 B1**
(45) Date of publication and mention of the grant of the patent: **21.05.2014**
(21) Application number: 09165309.7
(22) Date of filing: 13.07.2009
(51) Int. Cl.: B62J 1/16

(54) **Child bicycle seat**
Kinderfahrradsitz
Siège enfant pour bicyclette

(43) Date of publication of application: 19.01.2011
(73) Proprietor: Drexler Beheer B.V., 6983 BM Doesburg (NL)
(72) Inventor: Hagedoorn, Wilhelm Jasper, 6881 ML Velp (NL); Knaven, Franciscus Arnoldus, 7003 BR Doetinchem (NL)
(74) Representative: Houben, Christiaan Hein Willem Frans

(56) References cited:
- EP-A- 1 398 262
- DE-A1-102007 016 438
- FR-A- 2 347 910
- JP-A- 2005 153 571
- US-A- 5 190 306
- US-A- 5 582 462
- US-A1- 2004 045 089
- US-A1- 2004 061 297
- US-A1- 2009 134 678
- US-B1- 6 612 645

## Description

The present invention relates to a child safety seat for transporting a child.

In particular the invention relates to a child bicycle seat comprising a seat portion and a backrest portion, the seat being provided with fixing means for fixing the child seat on a bicycle, the seat furthermore including a belt assembly for securing a child in the child seat, which belt assembly comprises a pair of shoulder belts and a crotch belt, said crotch belt being fixedly connected to the seat portion.

In practise when the child is placed in the seat, the parent usually has to hold the bicycle with one hand to keep it from falling. Also when the child is seated in the seat the parent will mostly hold on to the bicycle to keep it stable.

From for example EP 1 759 967 A2 which is considered as the closest prior art, a child bicycle seat is known which has a seat portion and a backrest portion. The seat includes a belt assembly for retaining the child in the seat. The belt assembly comprises a crotch belt which is anchored to the seat portion and a pair of shoulder belts which form a loop. The shoulder belts are anchored to the backrest portion of the seat. The shoulder belts are connectable to the crotch belt by closing elements provided on the croch belt and the schoulder belts respectively. In use a child is placed in the seat and the loop of the shoulder belts is pulled over the head of the child such that the schoulder belts rest on the schoulders of the child. The crotch belt is extending upwards between the legs of the child after which the closing elements are brought into engagement with each other to close the belt assembly. Applying the belt assembly in this way can be somewhat cumbersome since it is often required to use two hands to close the belt assembly. Furthermore it is rather inconvenient to close the belt assembly between the legs of the child.

The present invention has for an object to provide an improved child bicycle seat.

This object is achieved by a child bicycle seat according to claim 1, wherein the shoulder belts are, at a lower end, fixedly connected to the crotch belt, and, at an upper end, connectable to the backrest portion via a quick-lock/quick-release mechanism so as to provide a quick locking of the shoulder belts to the backrest portion when a child is seated in the seat and to provide a quick release of the shoulder belts when a child is to be taken out of the seat.

In use, the child is placed in the seat and the belt assembly is hanging down at the front of the seat, the belt assembly being anchored to the seat portion through the crotch belt. Next, one of the shoulder belts can be grabbed at its free end and moved upwards and backwards over the child's torso towards the backrest portion of the seat. The shoulder belt concerned is then connected to the backrest portion by means of the quick-lock mechanism. This movement and locking can be done by the use of one hand only. Next the other shoulder belt is grabbed and brought to the backrest and secured thereto in a similar way as the first shoulder belt.

Contrary to the prior art seat, where only one locking action is necessary to close the belt assembly, in the present invention two locking actions are necessary to close the belt assembly. It is advantageous however that the shoulder belts can be attached to the backrest in this way, because the backrest portion provides a firm support onto which the free end of the shoulder straps can be pushed and locked without the use of two hands. This contrary to the wobbly connecting of the crotch belt and shoulder belts in the prior art seat of EP 1 759 967 A2.

Another advantage of the invention is that a child seated in the child seat cannot see and cannot easily release the shoulder belts itself as the locking mechanism is located behind it. Thus a safer belt assembly is provided which prevents the child to release itself during travel.

In each embodiment of the invention, the quick-lock/quick-release mechanism for connecting the shoulder straps to the backrest portion of the seat includes a latch mechanism.

The belt assembly is a three-point belt assembly with a crotch belt and two shoulder belts, which crotch belt and shoulder belts are interconnected by a connecting element, wherein the crotch belt is fixedly anchored to the seat portion of the seat.

In each embodiment each of the shoulder belts includes a first locking element at the upper end, and the backrest portion is provided with second locking elements which are releasably connectable with the respective first locking elements on the shoulder belts.

In each embodiment the backrest portion, on a front side thereof, is provided with at least one pair of apertures, wherein the second locking elements are arranged in the backrest behind said apertures, such that the first locking elements, provided on the shoulder belts, are insertable in said apertures so as to connect the first locking elements with the second locking elements.

In a preferred embodiment the first locking elements are provided with an operating button for releasing the quick-lock/quick-release mechanism, such that the first locking elements can be pulled from the second locking elements and the child can be taken out of the seat.

In a preferred embodiment the shoulder belts are provided with a padding to engage the shoulder of the child.

In another preferred embodiment the shoulder belts include a strap and, in a shoulder engaging section thereof, include a relatively stiff structure, connected to the strap for withholding and supporting the child. This relatively stiff structure provides a firm harness-like feel for the child when it leans forward, e.g. when the child falls asleep in the seat. Furthermore the more stiff structure, extending from the anchoring point of the shoulder belt at the backrest portion, prevents that the shoulder belts can slide from the shoulder of the child during travel. Thereby a safer child bicycle seat is provided.

In a further preferred embodiment the shoulder belts, preferably at a lower end of the relatively stiff structure mentioned above, are provided with an adjustment mechanism for the straps. Placement of the adjustment mechanism on this position provides an easy accessible adjustment of the strap.

The invention will be described in more detail with reference to the drawing, in which:
Fig. 1 shows a preferred embodiment of a child bicycle seat according to the invention with a belt assembly in a closed state,
Fig. 2 shows the seat of Fig. 1 with the belt assembly in an open state,
Fig. 3 shows an exploded view of the belt assembly of the seat shown in Fig. 1,
Fig. 4 shows schematically an alternative embodiment of the child seat according to the invention, and
Fig. 5 shows schematically another alternative embodiment of the child seat according to the invention.

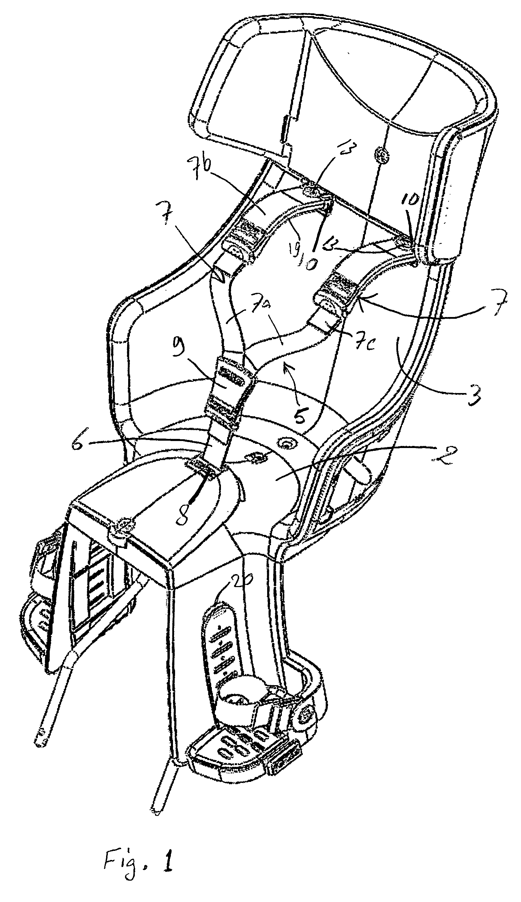

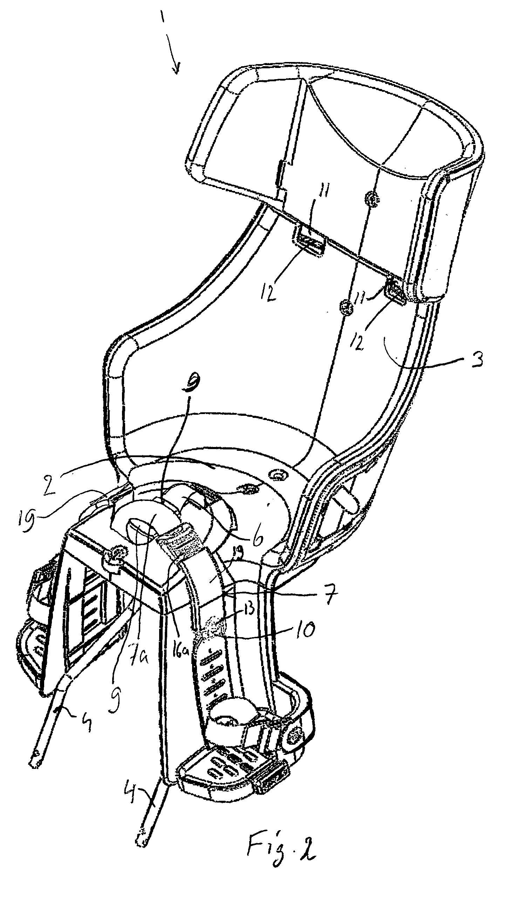

In Figs 1 and 2 is shown a child bicycle seat 1. The seat 1 comprises a seat portion 2 on which a child is seated and a backrest portion 3 for supporting the back of the child.

The specific embodiment of the seat 1 shown in the figures is provided with coupling rods 4 for fixing the child bicycle seat 1 to a bicycle. The specific fixing means for fixing the seat 1 to the bicycle are not material to the present invention and therefore the rods 4 may be replaced by other suitable fixing means.

The seat is provided with a belt assembly 5 for restraining the child when seated in the seat 1. The belt assembly 5 is in the embodiment a three-point belt assembly substantially comprising a crotch belt 6 and a pair of shoulder belts 7. The crotch belt 6 has a lower end which is anchored to the seat portion 2 of the seat 1 at an anchor point indicated by reference numeral 8. The upper end of the crotch belt 6 is attached to a connection element 9. A lower end of each of the shoulder belts 7 is attached to the connection element 9 as well.

The upper end of each of the shoulder belts 7 is provided with a locking element 10. In the backrest portion 3 of the seat 1 is provided a pair of slot-like apertures 11. The apertures 11 provide each access to a locking element 12, which is housed inside the backrest portion 3 of the seat 1. The locking element 12 is adapted to cooperate with the locking element 10 on the upper end of the shoulder belt 7.

The locking element 10 on the shoulder belt 7 comprises in the embodiment a latch which is coupled to a operating button 13. The locking element 12 in the backrest portion 3 comprises a counterpart cooperating with the latch to provide the locking action. In the locked state, when a parent wants to release the shoulder belt, he/she can push the button 13 to disengage the latch from the counterpart in the locking element 12 and then pull the locking element 10 from the aperture 11. Thereby the attachment of the shoulder belt 7 with the backrest portion 3 is released. In the unlocked state the parent can simply insert the locking element 10 into the aperture 11 whereby the latch snaps into engagement with the counterpart in the locking element 12. Thus a quick-lock/quick-release mechanism is provided which is easy to operate, also with one hand.

In the preferred embodiment shown in the figures the shoulder belts 7 comprise two parts: A lower part which is constituted by a strap 7a and an upper part which is constituted by a more rigid structure 7b.

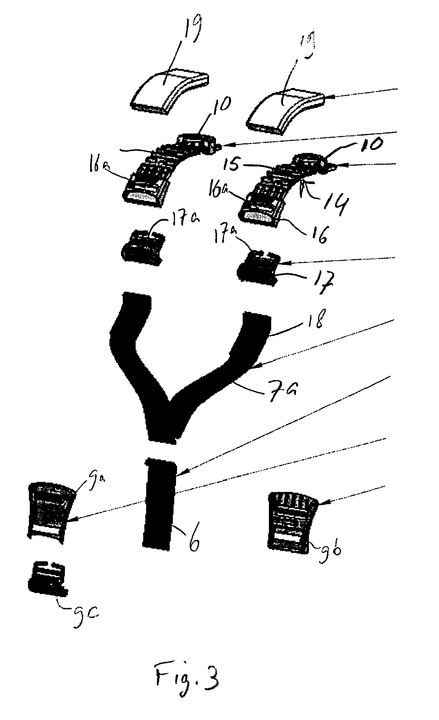

In Fig. 3 an exploded view is shown of the belt assembly. It can be seen in Fig. 3 that the more rigid structure is constituted by a plastic part 14 with a bendable body 15. At one end of the bendable body 15 the locking element 10 is provided. At the opposite end of the bendable body 15 a housing 16 is provided in which a clip 17 is housed. The end of the strap 7a is arranged in a loop indicated at 18 through an aperture 16a in the housing 16 and around a transverse element 17a the clip 17. By pushing the clip 17 inwardly into the housing 16, the loop of the strap 7a is released and can be adjusted by pulling the free end 7c of the strap 7a (shortening of the length) or by pulling the portion of the strap 7a extending between the connection element 9 and the housing 16 (extending the length).

The bendable body 15 of the plastic part 14 is enveloped in a padding element which is indicated in the figures by reference numeral 19. The more rigid structure 7b prevents that the shoulder belts 7 can slide from the shoulder of the child during travel. Thereby a safer child seat is provided.

The crotch strap 6 is also adjustable in length by means of a clip 9c in the connection element 9. This functions in essentially the same manner as described for the clips 17 for adjustement of the shoulder straps 7a. The connection element 9 comprises a front portion 9a, a rear portion 9b and a clip 9c for releasing the strap 6 for adjustment of the length as is shown in Fig. 3.

In use a child will be placed in the seat 1 with the belt assembly lying on and/or hanging from the front side of the seat 1. Alternatively, the locking elements 10 can be inserted into retaining elements 20 (see Fig. 1) provided at the footrests of the seat 1 as is shown in Fig. 2. In this way the shoulder belts are not hanging loosely around when the child seat is not in use.

When the child is seated, the parent can grab one shoulder belt 7 and move its free end provided with the locking element 10 upwards and rearwards towards the backrest portion 3 of the seat 1. The locking element 10 is then inserted into the apertures 11 after which the locking element 10, in particular the latch thereof snaps into locking engagement with the locking element 12 incorporated in the backrest portion 3 behind the aperture 11. Next, the other shoulder belt 7 is grabbed and is attached to the backrest portion 3 in the same manner after which the child is restrained in the seat1. If necessary the length of the crotch belt 6 and/or the shoulder belts 7 can be adjusted after the belt assembly is locked to the seat 1.

When a child has to be released from the seat 1, the parent can simply push the operating buttons 13 on the shoulder belts 7, after which the locking element 10 can be withdrawn from the locking element 12 and the aperture 11 in the backrest portion 3. Then the child can be taken from the seat 1.

In the embodiment of the seat shown in the Figs 1 and 2, the backrest portion is provided with one pair of apertures 11 with locking elements 12.

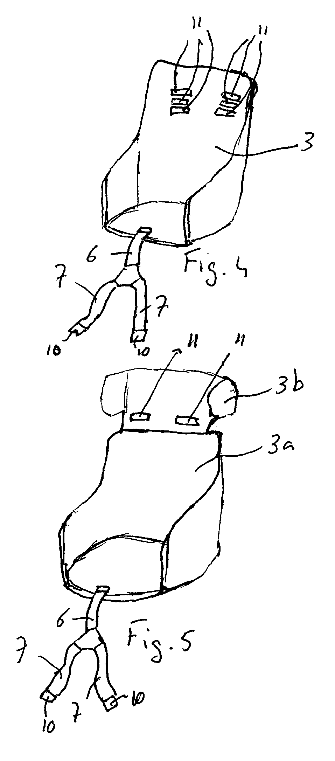

In another possible embodiment of the child bicycle seat, which is shown in Fig. 4, there are provided in the backrest portion 3 a plurality of such pairs of apertures 11 with locking elements 12. The pairs of apwertures 11 are situated above one another. This provides the possibility to connect the shoulder belts 7 to the backrest portion 3 at a height which is suitable for the size of the specific child seated in the seat.

In yet another possible embodiment of the child bicycle seat, which is shown in Fig. 5, the backrest portion 3 may comprise a lower backrest portion 3a and a headrest portion 3b, wherein the height of the headrest portion 3b is adjustable with regard to the lower backrest portion 3a. In this embodiment the pair of apertures 11 and corresponding locking elements 12 may be arranged in the headrest portion 3b, preferably at or near a lower end thereof, such that upon adjustment of the headrest portion 3b, the connection points of the shoulder belts 7 are automatically adjusted as well to suit the specific height of the child seated in the seat.

It is noted that the invention is not limited to the specific embodiments shown in the drawing. The embodiments shown serve as an example. Modifications and variations are readily conceivable by a person skilled in the art within the scope of the invention.

## Claims

1. Child bicycle seat (1) comprising a seat portion (2)and a backrest portion (3), the seat being provided with fixing means (4) for fixing the child seat (1) on a bicycle, and the seat furthermore including a belt assembly (5) for securing a child in the child seat, which belt assembly (5) comprises a pair of shoulder belts (7) and a crotch belt (6), said crotch belt (6) being fixedly connected to the seat portion, **characterized in that** the shoulder belts (7) are at a lower end fixedly connected to the crotch belt (6), and at an upper end connectable to the backrest portion (3) via a quick-lock/quick-release mechanism so as to provide a quick locking of the shoulder belts to the backrest portion when a child is seated in the seat and to provide a quick release of the shoulder belts when a child is to be taken out of the seat, wherein the belt assembly is a three-point belt assembly with a crotch belt and two shoulder belts, which crotch belt and shoulder belts are interconnected by a connecting element, wherein the crotch belt is fixedly anchored to the seat portion of the seat, wherein each of the shoulder belts includes a first locking element (10) at the upper end, and wherein the backrest portion is provided with second locking elements (12) which are releasable connectable with the respective first locking elements (10) on the shoulder belts, wherein the locking element (10) comprises a latch, wherein the second locking element (12) comprises a counterpart cooperating with the latch of the first locking element (10) to provide a locking action, wherein the backrest portion, on a front side thereof, is provided with at least one pair of apertureswherein the second locking elements (12) are arranged in the backrest portion behind said apertures (11), such that the first locking elements (10), provided on the shoulder belts, are insertable in said apertures (11) so as to connect the first locking elements (10) with the second locking elements (12) -, such that an operation of the quick-lock/quick-release mechanism with one hand is provided **in that** in a locked state the latch can be released from the counterpart in the locking element (12) and then pulled from the aperture (11) and **in that** in an unlocked state the locking element (10) can be inserted into the aperture (11) whereby the latch snaps into engagement with the counterpart in the locking element (12).

2. Child bicycle seat according to claim 1, wherein the backrest portion (3a) is provided with a plurality of pairs of apertures (11) with locking elements (12), which pairs of apertures (11) are situated above one another.

3. Child bicycle seat according to claim 1, wherein the backrest portion (3) comprises a lower backrest portion (3a) and a headrest portion (3b), wherein the height of the headrest portion (3b) is adjustable with regard to the lower backrest portion (3a), wherein the pair of apertures (11) and corresponding locking elements (12) are arranged in the headrest portion (3b), such that upon adjustment of the headrest portion (3b), the connection points of the shoulder belts (7) are automatically adjusted as well to suit the specific height of the child seated in the seat (1).

4. Child bicycle seat according to any one of the preceding claims, wherein the seat (1) comprises retaining elements (20) provided at the footrests of the seat (1), into which the locking elements (10) can be inserted.

5. Child bicycle seat according to any one of claims 1 to 4, wherein the first locking elements are provided with an operating button (13) for releasing the quick-lock/quick-release mechanism, such that the first locking elements (10) can be pulled from the second locking elements (12) and the child can be taken out of the seat (1).

6. Child bicycle seat according to any one of the preceding claims, wherein the shoulder belts (7) are provided with a padding (19) to engage the shoulder of the child.

7. Child bicycle seat according to any one of the preceding claims, wherein the shoulder belts (7) include a strap (7a) and, in a shoulder engaging section thereof, include a with respect to the strap relatively stiff structure (7b), connected to the strap (7a) for withholding and supporting the child.

8. Child bicycle seat according to claim 7, wherein the shoulder belts, preferably at a lower end of the relatively stiff structure (7b) mentioned in claim 7, are provided with an adjustment mechanism for the straps.

## Patentansprüche

1. Kinderfahrradsitz (1), der einem Sitzteil (2) und einem Rückenlehnenteil (3) aufweist, wobei der Sitz mit Befestigungsmitteln (4) zur Befestigung des Kindersitzes (1) auf einem Fahrrad versehen ist, und der Sitz desweiteren eine Gurteinrichtung (5) zur Sicherung eines Kindes im Kindersitz beinhaltet, welche ein Paar Schultergurte (7) und einen Schrittgurt (6) umfasst, wobei besagter Schrittgurt fest mit dem Sitzteil verbunden ist, **dadurch gekennzeichnet, dass** die Schultergurte (7) an einem unteren Ende fest mit dem Schrittgurt (6) verbunden sind, und an einem oberen Ende mit dem Rückenlehnenteil (3) über einen Schnellverschluss (quick-lock/ quick-release) verbunden werden können, so dass die Schultergurte am Rückenlehnenteil schnell gesichert werden können, wenn sich ein Kind im Sitz befindet, und die Schultergurte schnell gelöst werden können, wenn ein Kind aus dem Sitz genommen werden soll, wobei es sich bei der Gurteinrichtung um einen Dreipunktgurt mit einem Schrittgurt und zwei Schultergurten handelt, wobei der Schrittgurt und die Schultergurte über ein Verbindungselement miteinander verbunden sind, und wobei der Schrittgurt fest am Sitzteil des Sitzes verankert ist, wobei jeder Schultergurt ein erstes Sicherungselement (10) am oberen Ende umfasst, und wobei der Rückenlehnenteil mit zweiten Sicherungselementen (12) versehen ist, welche lösbar mit den entsprechenden ersten Sicherungselementen (10) an den Schultergurten verbunden werden können, wobei das Sicherungselement (10) einen Riegel aufweist, wobei das zweite Sicherungselement (12) eine Gegenstück mit dem Riegel des ersten Sicherungselement (10) zusammenwirkt um eine Verriegelungswirkung bereitzustellen, wobei der Rückenlehnenteil an einer Vorderseite mit mindestens einem Paar Öffnungen versehen ist, wobei die zweiten Sicherungselemente (12) sich in der Rückenlehnenteil hinter besagten Öffnungen (11) befinden, so dass die ersten Sicherungselemente (10), die sich an den Schultergurten befinden, in besagte Öffnungen (11) gesteckt werden können, um die ersten Sicherungselemente (10) mit den zweiten Sicherungselementen (12) zu verbinden, so dass ein Betrieb des Schnellversluss mit einer Hand ist, dass in einem verriegelten Zustand der Riegel von dem Gegenstück in dem Sicherungselement (12) freigegeben und dann von der Öffnung (11) gezogen werden kann und soweit dass in einem entriegelten Zustand das Sicherungselement (10) in die Öffnung eingeführt werden (11), wobei der Riegel in Eingriff mit dem Gegenstück in dem Sicherungselement (12) schnappt.

2. Kinderfahrradsitz nach Anspruch 1, wobei der Rückenlehnenteil (3a) mit einer Mehrzahl von Paaren von Öffnungen (11) mit Sicherungselementen (12), wobei die Paare von Öffnungen (11) übereinander angeordnet vorgesehen sind.

3. Kinderfahrradsitz nach Anspruch 1, wobei der Rückenlehnenteil (3) einen unteren Lehnenteil (3a) und einen Kopfteil (3b) aufweist, wobei die Höhe des Kopfteil (3b) einstellbar in Bezug auf den unteren Rückenlehnenteil (3a) ist, wobei das Paar von Öffnungen (11) und korrespondierende Sicherungselement (12) in der Kopfstützenteil (3b) angeordnet ist, so daß bei Einstellung der Kopfstützenteil (3b), die Verbindungspunkte der Schultergurte (7) ebenfalls automatisch eingestellt werden für die spezifische Größe des in dem Sitz (1) sitzenden Kindes.

4. Kinderfahrradsitz nach einem der vorhergehenden Ansprüche, wobei der Sitz (1) Halteelemente (20) versehen an den Fußstützen des Sitzes (1) aufweist, in die die Sicherungselemente (10) einsetzbar ist.

5. Kinderfahrradsitz nach einem der Ansprüche 1 bis 4, wobei die ersten Sicherungselemente mit einem Bedienknopf (13) zur Freigabe des Schnellverschlusses versehen sind, so dass die ersten Sicherungselemente (10) von den zweiten Sicherungselementen (12) gezogen werden können, und das Kind aus dem Sitz (1) genommen werden kann.

6. Kinderfahrradsitz nach einem der vorangehenden Ansprüche, wobei die Schultergurte (7) mit einer Polsterung (19) versehen sind, die die Schulter des Kindes umgreift.

7. Kinderfahrradsitz nach einem der vorangehenden Ansprüche, wobei die Schultergurte (7) ein Band (7a) beinhalten und in einem die Schulter umgreifenden Teil eine relativ steife Struktur (7b) aufweisen, die mit dem Band (7a) verbunden ist, um das Kind zu halten und zu stützen.

8. Kinderfahrradsitz nach Anspruch 7, wobei die Schultergurte mit einer Einstellvorrichtung für die Bänder versehen sind, vorzugsweise an einem unteren Ende der in Anspruch (7) genannten relativ steifen Struktur (7b).

## Revendications

1. Siège enfant pour bicyclette (1) comprenant une portion de siège (2) et une portion de dossier (3), le siège étant pourvu d'un moyen de fixation (4) pour fixer le siège enfant (1) sur une bicyclette, et le siège comprenant en outre un assemblage de ceintures (5) pour attacher un enfant dans le siège enfant, lequel assemblage de ceintures (5) comprend une paire de ceintures d'épaules (7) et une ceinture d'entrejambe (6), ladite ceinture d'entrejambe (6) étant fixement reliée à la portion de siège, **caractérisé en ce que** les ceintures d'épaules (7) sont, à une extrémité inférieure, fixement reliées à la ceinture d'entrejambe (6), et peuvent, à une extrémité supérieure, être reliées à la portion de dossier (3) par l'intermédiaire d'un mécanisme de verrouillage rapide/libération rapide de manière à fournir un verrouillage rapide des ceintures d'épaules sur la portion de dossier lorsqu'un enfant est assis dans le siège et à fournir une libération rapide des ceintures d'épaules lorsqu'un enfant doit être sorti du siège, dans lequel l'assemblage de ceintures est un assemblage de ceintures à trois points avec une ceinture d'entrejambe et deux ceintures d'épaules, la ceinture d'entrejambe et les ceintures d'épaules étant interconnectées par un élément de liaison, dans lequel la ceinture d'entrejambe est fixement ancrée sur la portion de siège du siège, dans lequel chacune des ceintures d'épaules comprend un premier élément de verrouillage (10) à l'extrémité supérieure, et dans lequel la portion de dossier est pourvue de deux éléments de verrouillage (12) qui peuvent être reliés, de manière libérable, aux premiers éléments de verrouillage (10) respectifs sur les ceintures d'épaules, dans lequel l'élément de verrouillage (10) comprend un loquet, dans lequel le deuxième élément de verrouillage (12) comprend une contrepartie coopérant avec le loquet du premier élément de verrouillage (10) pour fournir une action de verrouillage, dans lequel la portion de dossier, sur un côté avant de celle-ci, est pourvue d'au moins une paire d'ouvertures, dans lequel les deuxièmes éléments de verrouillage (12) sont agencés dans la portion de dossier derrière lesdites ouvertures (11), de sorte que les premiers éléments de verrouillage (10), fournis sur les ceintures d'épaules, puissent être insérés dans lesdites ouvertures (11) afin de relier les premiers éléments de verrouillage (10) aux deuxièmes éléments de verrouillage (12), de sorte qu'une opération du mécanisme de verrouillage rapide/libération rapide d'une main est effectuée, **en ce que**, dans un état verrouillé, le loquet peut être libéré de la contrepartie dans l'élément de verrouillage (12) puis tiré hors de l'ouverture (11) et **en ce que**, dans un état déverrouillé, l'élément de verrouillage (10) peut être inséré dans l'ouverture (11) de telle manière que le loquet s'enclenche avec la contrepartie dans l'élément de verrouillage (12).

2. Siège enfant pour bicyclette selon la revendication 1, dans lequel la portion de dossier (3a) est pourvue d'une pluralité de paires d'ouvertures (11) avec des éléments de verrouillage (12), lesquelles paires d'ouvertures (11) sont situées l'une au-dessus de l'autre.

3. Siège enfant pour bicyclette selon la revendication 1, dans lequel la portion de dossier (3) comprend une portion de dossier inférieure (3a) et une portion d'appui-tête (3b), dans lequel la hauteur de la portion d'appui-tête (3b) est ajustable par rapport à la portion de dossier inférieure (3a), dans lequel la paire d'ouvertures (11) et les éléments de verrouillage correspondants (12) sont agencés dans la portion d'appui-tête (3b), de sorte que, lors d'un ajustement de la portion d'appui-tête (3b), les points de liaison des ceintures d'épaules (7) soient également ajustés automatiquement pour correspondre à la hauteur spécifique de l'enfant assis dans le siège (1).

4. Siège enfant pour bicyclette selon l'une quelconque des revendications précédentes, dans lequel le siège (1) comprend des éléments de rétention (20) disposés au niveau des repose-pieds du siège (1) dans lesquels les éléments de verrouillage (10) peuvent être insérés.

5. Siège enfant pour bicyclette selon l'une quelconque des revendications 1 à 4, dans lequel les premiers éléments de verrouillage sont pourvus d'un bouton d'actionnement (13) pour libérer le mécanisme de verrouillage rapide/libération rapide, de sorte que les premiers éléments de verrouillage (10) puissent être tirés hors des deuxièmes éléments de verrouillage (12) et que l'enfant puisse être sorti du siège (1).

6. Siège enfant pour bicyclette selon l'une quelconque des revendications précédentes, dans lequel les ceintures d'épaules (7) sont pourvues d'un rembourrage (19) pour engager l'épaule de l'enfant.

7. Siège enfant pour bicyclette selon l'une quelconque des revendications précédentes, dans lequel les ceintures d'épaules (7) comprennent une sangle (7a) et, dans une section d'engagement d'épaule de celles-ci, comprennent une structure relativement rigide par rapport à la sangle (7b) reliée à la sangle (7a) pour retenir et supporter l'enfant.

8. Siège enfant pour bicyclette selon la revendication 7, dans lequel les ceintures d'épaules, de préférence à une extrémité inférieure de la structure relativement rigide (7b) mentionnée à la revendication 7, sont pourvues d'un mécanisme d'ajustement pour les sangles.
